# EUROPEAN PATENT SPECIFICATION

(11) **EP 3 063 476 B1**
(45) Date of publication and mention of the grant of the patent: **05.09.2018**
(21) Application number: 15771235.7
(22) Date of filing: 17.09.2015
(51) Int. Cl.: F24D 3/08, F24D 12/02, F24D 19/10, G05D 23/00

(54) **TEMPERATURE CONTROL APPARATUS, METHOD FOR ITS OPERATION AND COMPUTER PROGRAM PRODUCT**
VORRICHTUNG ZUR TEMPERATURKONTROLLE, VERFAHREN ZU DEREN BETRIEB UND COMPUTERPROGRAMMPRODUKT
APPAREIL DE CONTRÔLE DE TEMPERATURE, PROCÉDÉ POUR SON OPÉRATION ET PRODUIT-PROGRAMME D'ORDINATEUR

(30) Priority: 18.09.2014 GB 201416531
(43) Date of publication of application: 07.09.2016
(73) Proprietor: British Gas Trading Limited, Windsor, Berkshire SL4 5GD (GB)
(72) Inventor: RICHARDSON, Adrian Robin, Windsor Berkshire SL4 5GD (GB); O'MALLEY, Nicholas, Windsor Berkshire SL4 5GD (GB); BARLOW, Lee Christian, Windsor Berkshire SL4 5GD (GB); KEOWN, William James, Windsor Berkshire SL4 5GD (GB)
(74) Representative: Leach, Sean Adam
(86) International application number: PCT/GB2015/052694
(87) International publication number: WO 2016/042334

(56) References cited:
- EP-A1- 2 738 362
- GB-A- 2 288 460
- US-A1- 2005 161 521

## Description

### Field of Invention

The present disclosure relates to alternative energy provision, and more particularly to combined heat and power generation apparatus such as may be used to heat buildings and contribute to the supply of electrical power to those buildings.

### Background

There is an increasing need for energy efficiency, both to address the problems of climate change and to reduce the cost to consumers of heating buildings and of providing electrical power in those buildings.

It has been proposed to use combined heat and power apparatus, CHP, in both domestic and commercial buildings, which contribute both to meeting the demands for electrical power in the building and to heating the building. In some circumstances CHP apparatus may produce sufficient electrical power to meet the supply needs of the building and to feed power back into the electrical power grid. If increasing numbers of CHP systems are installed, and begin to feed electrical power into the grid, they may become a significant source of power. The grid itself will also become more complex, with regions of the grid acting as sources of electrical power at some times, and as sinks of electrical power at other times.

To achieve the best efficiency from CHP apparatus it is desirable to use both the electrical power and the heat generated by the apparatus in the building in which it is installed.

The demand for heating in buildings is subject to daily and seasonal variations. Demand for electrical power also varies in a similar periodic or quasi periodic fashion in individual buildings and there are also other short and long term temporal variations in demand for electrical power. Where large numbers of buildings are coupled to a common electrical power supply grid these fluctuations in demand may place the supply grid under strain and degrade the quality of the electrical supply, for example causing reduction in voltage levels or variations in the frequency of an AC mains power supply signal. These problems may affect geographic locations differently. The degree and nature of these effects may depend on the availability of electrical power, the local capacity of the supply network, and the local demand for electricity. US2005161521 describes a system and method for cogeneration of electric power and building heat that efficiently interfaces a liquid-cooled electric power generator with a multizone forced hot water (hydronic) space heating system. The system and method utilizes an electric generator with an electric output capacity (kW) that is near the time-averaged electric power consumption rate for the building and with a heat generation capacity that is useful for meeting building heating needs. This generator is operated as the priority source of heat for the building, but normally only when there is a demand for heat in building, with the intent of running the generator for long periods of time and generating a total amount of electric energy (kWhs) that is significant in comparison to the total electric energy consumption of the building over time.

Document US2005161521A1 discloses a temperature control apparatus for a building, the apparatus comprising:
- an electricity generator, operable to contribute to an electrical power supply for electrical appliances at the building;
- a heat transfer circuit adapted to circulate heat transfer fluid to cool the electricity generator;
- a heating system comprising a heat source for providing heat energy to a space heater for heating at least one zone of the building and a heat exchanger adapted to supplement the heat energy from the heat source with heat energy obtained from the heat transfer circuit;
- a user interface adapted to enable a user to select a desired temperature for the at least one zone of the building, and a time period for which the desired temperature is to be maintained;
- a controller configured to operate the electricity generator to generate electricity and to preheat the space heater using the heat exchanger and to obtain a first signal based on the temperature of the at least one zone of the building to determine when to switch on the heat source based on the user selected time period (day time / night setback) and to determine when to switch on the heat source based on the user selected first time period, the desired temperature and the first signal.
Peaks and troughs in demand for electrical power may be correlated to some degree with the demand for heating, but the degree of correlation is not sufficient alone to permit electricity suppliers to rely upon CHP contributions to address consumer demand for electrical power. The present disclosure aims to address these and related technical problems.

### Summary of Invention

Aspects and embodiments of the invention are set out in the appended claims.

### Brief Description of Drawings

Embodiments of the invention will now be described, by way of example only with reference to the accompanying drawings, in which:
Figure 1 illustrates a combined heat and power apparatus; and
Figure 2 illustrates a system for controlling electricity supplies comprising a power distribution control apparatus and a plurality of CHP systems.

In the drawings like reference numerals are used to indicate like elements.

### Specific Description

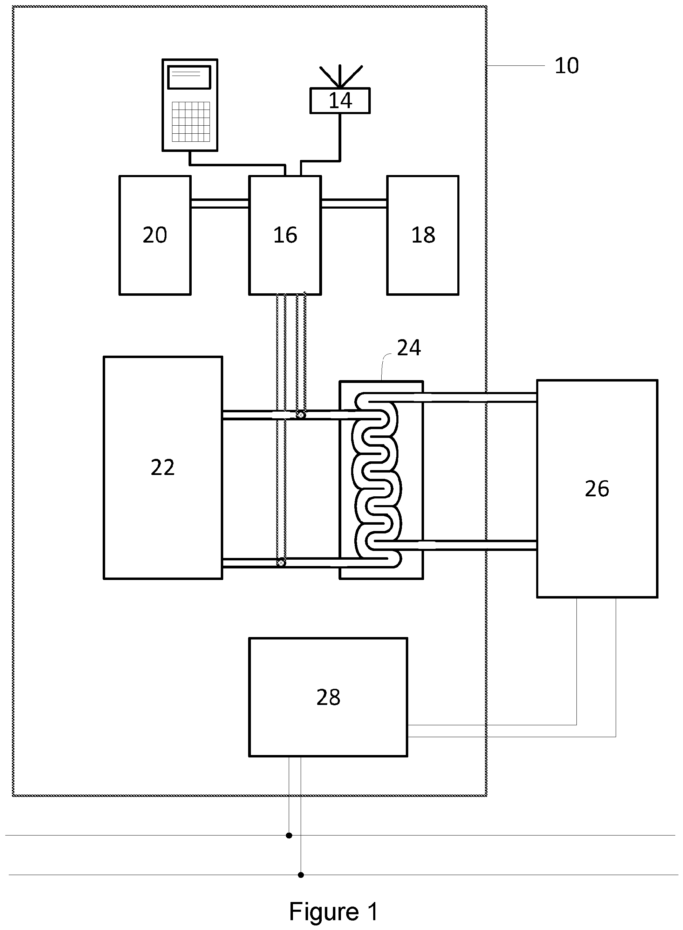

Figure 1 shows a temperature control apparatus for a building 10. The apparatus comprises an electricity generator 26 arranged to contribute to the electrical power supply 28 available to a consumer at the building 10. The electricity generator 26 may also be operable to feed electrical power back into the electricity supply grid. As explained in more detail below, the apparatus also comprises a controller 16 configured to determine the timing of operation of this electricity generator 26 based on the thermal capacity of the hot water tank 18 and/or the demand for space heating in the building 10. The apparatus shown in Figure 1 includes a heating system having a space heater 20 and a hot water tank 18. The heating system also has a heat exchanger 24 arranged to
supplement heat provided by the heating system's own heat source 22 with excess heat obtained by cooling the electricity generator 26.

The heating system's heat source 22 may comprise a fuel burner for example a gas or oil fired boiler. The heat source 22 is coupled to a space heater 20, which may comprise fluid filled radiators for heating one or more zones of the building 10. The heat source 22 is also coupled to heat water to be stored in the hot water tank 18. The hot water tank 18 is arranged to store, and to dispense, a supply of hot water for use by a consumer in the building 10.

A heat transfer circuit is arranged to circulate a heat transfer fluid around an engine of the electricity generator 26 to remove excess heat from the generator, and to provide the heat transfer fluid to the heat exchanger 24, which may be arranged inside the building 10, for example the heat exchanger 24 may be arranged in a zone of the building 10 which is at least partially heated by the heating system. The heat transfer fluid may comprise a fluid with a melting point of less than zero degrees centigrade, for example the heat transfer fluid may comprise glycol.

The heat exchanger 24 is coupled to the heating system and adapted to supplement the heat energy from the heat source 22 with heat energy obtained from the heat transfer circuit.

The heating system comprises a user interface 12 to enable a user to select a desired temperature for the building 10. The user interface may comprise a human input device such as buttons, switches, a touch screen or a pointing device, and one or more output devices such as a screen or other display means. For example, the user interface 12 may be arranged to allow a user to select a desired temperature for a particular zone of the building 10 such as a room or collection of rooms. Generally the user interface 12 is also operable to select at least one first time period during which the desired temperature is to be maintained - for example the user interface 12 may be operable by a user to select a start and a duration or end time for the space heating. Generally, when operating the space heating, a consumer may select a time period in the morning, and perhaps also another time period later in the day during which a desired temperature is to be maintained. The user interface 12 may also be operable to allow a user to specify at least one second time period during which the consumer wishes to be able to dispense hot water from the hot water tank 18.

The hot water tank 18 has a certain thermal capacity associated with the quantity of water that the tank 18 is able to store, the fill level of the tank 18 at any given time, and the temperature of the water in the tank 18.

The hot water tank 18 may comprise one or more sensors arranged to provide fill level and temperature signals to the controller 16 to enable the controller 16 to determine the thermal capacity of the tank 18 and/or the thermal demand associated with meeting the consumer's demand for hot water. The heating system may also comprise one or more temperature sensors arranged to provide signals to the controller 16 indicating the temperature of one or more zones of the building 10 and perhaps also the temperature outside the building 10. In the interest of clarity these sensors are not illustrated in Figure 1.

The controller 16 may be coupled to a communications interface 14 for communicating over a network such as a wireless and/or wired network such as a local area network (LAN) which may be coupled to a wide area network, for example a telecommunications network, for example the internet, for communicating with a remote device, for example a device in a different geographical location than the building 10. The controller 16 may also be configured to communicate with one or more of the other components of the apparatus shown in Figure 1 via this communications interface 14 for example over the LAN and/or via a serial communications BUS which may operate according to a MODBUS protocol. The electricity generator 26 may be configured to report data such as voltage and frequency available at the mains electricity supply 28 in the form of a CANBUS message, and the controller of the CHP system may be configured to translate the data from CANBUS to another protocol such as MODBUS. The controller may also be configured to receive a MODBUS command, for example from the user interface 12 or in the form of a message received over the communications interface 12, and to translate the MODBUS message into a CANBUS command to start or stop operation of the electricity generator 26. The MODBUS interface may comprise MODBUS RTU (serial), but in some embodiments may also comprise MODBUS over a data network protocol such as IP and/or TCP data networks.

The controller 16 may be adapted to report the thermal capacity of the building 10 - for example the thermal capacity of the hot water tank 18 and/or the thermal demand associated with the space heating to a remote device via this communications interface 14. The controller 16 may also be adapted to obtain data from the electricity generator 26 indicating the voltage and/or frequency of the external mains electricity supply to the building 10.

The controller 16 is configured to obtain data indicating the thermal capacity of the hot water tank 18, for example it may be configured to determine this based on the sensor signals from the hot water tank 18. It is also configured to determine a thermal demand of the space heating. This determination may be based on one or more of the sensor signals, the desired temperature for the zone (or zones) of the building 10 associated with these temperature sensor signals, and the time period during which the consumer has selected that this temperature is to be maintained.

In operation of the hot water system, the controller 16 obtains data indicating the thermal capacity of the hot water tank 18, and provided that the thermal capacity of the hot water tank is greater than a selected threshold level, the controller 16 switches on the electricity generator 26 and operates the heat exchanger 24 to heat water to be stored in the hot water tank 18, this threshold level may be selected based on the heat output of the heat exchanger 24 to ensure that the electricity generator 26 is switched on for a time period at least 1 minute, for example at least 5 minutes, for example at least 30 minutes in order to fulfil the thermal capacity of the hot water tank 18. The controller may also obtain data indicating that the thermal capacity of the hot water tank has been exceeded (e.g. the water is over temperature), or that the thermal capacity is less than a selected threshold level and, may determine based on this data to switch off the electricity generator 26.

In order to balance the geographical distribution of power supply electricity grid, the controller 16 may receive a command to switch off the electricity generator 26, for example the command may be received from a remote device via the communications interface 14. The controller 16 may respond to this command by determining whether the quantity of hot water stored in the hot water tank 18 is sufficient to meet the users requirements, and in the event that it is not, the controller 16 may switch on the heat source 22 to heat hot water for the hot water tank 18.

In operation of the space heating system, prior to the start of a first time period during which the user has selected a desired temperature for a zone of the building 10, the controller 16 switches on the electricity generator 26 and uses the heat exchanger 24 to at least partially preheat the space heater 20 and/or the zone of the building 10.

The controller 16 may then identify when the temperature of the space heater 20 and/or the zone of the building 10 has reached an equilibrium state, for example based on detecting that the rate of change of temperature is less than a selected threshold or by operating the electricity generator 26 and heat exchanger 24 for a selected duration.

At the end of this preheat phase, and prior to the start of the first time period, in the event that the temperature of the zone remains less than the desired temperature, the controller 16 may operate both the electricity generator 26 and the heat source 22 together to heat the zone. The switch on time of the generator and heat source 22 for this dual-heating period may be selected to achieve the desired temperature of the zone at the start of the first time period.

Whilst, as mentioned above, the controller 16 may be configured to receive commands to switch off the electricity generator 26 during this dual-heating phase, the controller 16 may also be configured to increase the duration of operation of the electricity generator 26. For example towards the end of the dual-heating (ramp-up) heating phase, as the zone approaches the desired temperature, the controller 16 may be configured to switch off the heat source 22 of the heating system prior to switching off the electricity generator 26 whilst continuing to monitor the temperature (and perhaps also the rate of change of temperature) in the zone of the building 10. The controller 16 may then determine whether it is possible to continue to run the electricity generator 26 without overshooting the desired temperature - for example the electricity generator 26 may be run at all times when space heating is desired.

Embodiments of the system illustrated in and described with reference to Figure 1 may be used to provide a power distribution control apparatus adapted to supplement and control electrical power supply, for example to accommodate localised variations in power demands placed on the supply grid.

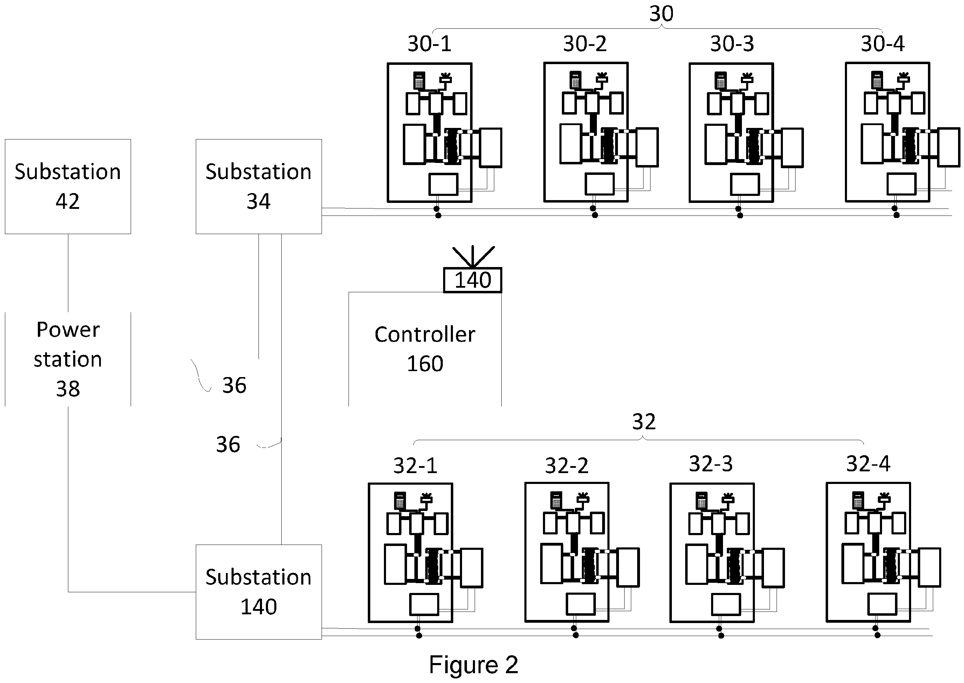

One such apparatus is illustrated in Figure 2. The apparatus shown in Figure 2 comprises a distributed network of CHP systems 30-1, 30-2, 30-3, 30-4, 32-1, 32-2, 32-3, 32-4 each installed at a separate dwelling to generate electrical power to contribute to the electrical power supply at the dwelling.

The supply grid illustrated in Figure 2 comprises a power station 38 coupled by conductors 36 (e.g. cables) to provide electrical power to a plurality of substations 34, 40, 42. The CHP systems illustrated in Figure 2 are all coupled to the power supply grid 34, 36, 38, 40 which may extend over a wide geographical area (e.g. most or all of a nation). The grid comprises a high-voltage electric power transmission network 36, and connects power stations 38 and the substations 34, 40, 42, to ensure that electricity generated in one geographic location can be used to satisfy demand elsewhere.

For example, the subset of CHP systems 30 at a first set of dwellings in a first geographical location may be coupled to the power supply grid by a first substation 34 whilst a second subset of CHP systems 32 at a second set of dwellings may be coupled to the power supply grid by a second substation 40. Variations in the demand for electrical power at the first set of dwellings 30 may have an impact on the voltage and/or frequency of the supply to those dwellings, but may also affect the supply to other dwellings for example such as the second set of dwellings 32.

The power distribution control apparatus shown in Figure 2 comprises a controller 160 and a communications interface 140 arranged to allow the controller 160 to communicate over a network with the plurality of CHP systems.

The communications interface 140 of the controller 160 illustrated in Figure 2 may comprise a server having a wired or wireless interface adapted to send and receive messages over a telecommunications network, for example over the internet, to selected ones and/or to selected subsets, of the CHP systems.

The CHP systems 30, 32 are each adapted to provide data to the controller 160 indicating the voltage and or frequency of the power supply obtainable from the power supply grid by the CHP system. Some or all of the CHP systems may each be adapted to provide data to the controller 160 indicating the thermal capacity available at the dwelling at which they are installed, for example a thermal capacity associated with a hot water tank 18 of the dwelling and/or the thermal capacity and/or thermal demand associated with a space heating system. They may also be configured to provide data indicating the thermal demand of the space heating system as a function of time - for example based on a user selected program comprising periods of operation, desired temperature. The CHP systems may also be adapted to provide data indicating temperature in at least one zone of the dwelling and/or an external temperature.

The controller 160 is configured to monitor frequency of the AC voltage provided by the grid, for example by monitoring the supply from one or more substations and/or by monitoring the frequency of the voltage measured by one or more CHP systems. The controller 160 may be configured to ensure that the frequency remains within 0.5 Hz of 50 Hz.

The controller 160 may be configured to store data indicating the time dependent thermal demand and/or thermal capacity of a plurality of the dwellings, and to determine based on this data a series of subsets of the CHP systems that are available at any particular time to offer increased generation (or reduced demand from the dwelling), and the time for which this facility can be maintained. For example the controller 160 may identify a first subset of CHP systems that can be operated to generate electricity to reduce demand for a minimum of 15 minutes without exceeding the thermal demand and/or thermal capacity of the dwelling in which they are installed. This first subset of CHP systems may then be used to provide a fast reserve in the event of fluctuation of the frequency of power supply of more than 0.5Hz. The controller 160 may also determine, based on this time dependent thermal demand and/or thermal capacity data, a second subset of CHP systems that are able to deliver power (or reduce consumption) within five minutes automatically, or seven minutes of a manual instruction, and to be maintained for a minimum of four hours. This second subset of systems may be used to provide a fast start reserve. In this way collections of CHP systems distributed in consumer dwellings may be operated to provide a virtual power plant.

To implement this, the controller 160 is configured to obtain data indicating the thermal demand associated with one or more of the dwellings, for example indicating the thermal demand as a function of time. This data may also comprise an indication of the thermal capacity available at one or more of the dwellings, for example the thermal capacity available by topping up a hot water tank 18 at the dwelling. Some or all of this data may be provided in messages received from the CHP systems. Some or all of this data may be provided locally in a data store, for example it may be predetermined or based on seasonal or historic variations and may comprise estimates. The controller 160 may also be adapted to obtain data indicating generalised grid conditions, such as low voltage or excessive voltage in particular geographical locations for example in locations associated with one or more substations of the grid. This data may be obtained based on user input and/or based on monitoring or telemetry data received from other devices in the power supply grid.

The controller 160 is also operable to send a message comprising a command to switch a CHP system on to generate electricity, and to send a message comprising a command to switch a CHP system off. The controller 160 may be configured to send a common message to a selected subset of the CHP systems, and may also be configured to select this subset based on data obtained from the CHP systems.

In one mode of operation, the controller 160 monitors a generalised grid condition by obtaining data indicating the voltage of a power supply provided by a particular substation. In the event that the data indicates that the supply voltage at the substation is less than a target voltage, the controller 160 determines the voltage change that would be required of the input supply, provided to the substation, for the output supply provided from the substation to meet this target. The controller 160 may then select a subset of the CHP systems that can be activated to generate electrical power and/or to shed load from the associated dwellings in order to raise the voltage at that substation towards the target voltage. This subset of CHP systems may be selected based on the time of day (and/or time of year) and data indicating the time dependent thermal demand and/or thermal capacity of the dwellings associated with those CHP systems. This provides one way to operate a CHP system installed at a first dwelling based on a generalised grid condition.

In another mode of operation, the controller 160 monitors condition of electrical supply at a first dwelling, and controls the operation of an electricity generator 26 of a CHP system at one or more other dwellings based on this condition. For example a CHP system at a first dwelling may report the voltage and/or frequency of the power supply from the grid at the dwelling to the controller 160. In the event that the voltage or frequency is outside a target range (for example within 1% of target value) the controller 160 sends a command to one or more other CHP systems in order to modify the voltage and/or frequency of the supply at the first dwelling toward the target range. The one or more other CHP systems may be selected based on the time of day (and/or time of year) and data indicating the time dependent thermal demand and/or thermal capacity of the dwellings associated with those CHP systems. It is mentioned above that data indicating the quality of electrical supply (e.g. voltage or frequency) may be obtained from a CHP system, but it will be appreciated that some or all of this data may also be obtained from an electricity meter coupled to the CHP system.

The controller 160 may select the electricity generators that are to be operated at other dwellings based on electrical demand at those dwellings, for example the controller may be configured to switch on an electricity generator in a second dwelling that is coupled to the same or a related supply (e.g. to the same substation) as the first dwelling in order to shed load from that second dwelling, the second dwelling may be selected based on electrical demand at that dwelling.

The commands sent by the controller 160 to the CHP systems may be configured to override a user specified control set by the consumer using a user interface 12 at the dwelling. This may be used by the controller 160 to send commands to CHP systems in a first geographical location to operate CHP systems in that geographic location (for example CHP systems coupled to a common substation) to generate electrical power.

The controller 160 may determine the number of substations based on a message (or messages) received from CHP systems at a second geographic location (e.g. coupled to a different substation). The controller 160 may do this to shed load from this second substation to allow the voltage at the first substation to be raised towards the target level.

Other features and modes of operation may be used with the system illustrated in Figure 2. As one example, the controller 160 may be configured to select particular CHP systems to avoid switching on a CHP system that will need to be switched off again shortly afterwards, for example the controller 160 may select only CHP systems that can be run for more than a selected minimum duration, or choose to extend the operating duration of one or a group of CHP systems rather than bringing others online in order to meet the demands of the grid with the smallest number of switching of be operated based on a number of switching cycles of the CHP systems. The controller 160 may be configured to store data indicating the number of switching cycles of one or more of the CHP systems.

The above embodiments are to be understood as illustrative examples. For example, the dwelling described with reference to Figure 2 may be any kind of building such as commercial premises.

As another example, in some embodiments the controller 160 is configured to obtain data indicating a shortfall of electricity in an area of the grid, for example in the supply from one or more substations, and to respond to that shortfall by identifying a number CHP systems coupled to that supply and which (a) are not producing electricity at that time and (b) are located in dwellings where the thermal capacity of the building enables activation of the CHP system without increasing the temperature of the building beyond a selected threshold level. This threshold level may be set by a user command, or it may be specified by the controller 160. In some examples the controller is configured to identify these CHP systems based on temperature signals obtained from the dwellings in which they are located. This may enable CHP systems in dwellings where the temperature is below threshold (e.g. 17°C or lower) to be activated to generate electricity and to be switched off when they raise the temperature in the dwelling above the threshold (e.g. to 18°C or more). This may have the advantage of allowing load shedding, or additional generation capacity in the grid.

As another example, thermal and/or electrical demands may vary as a function of time, as explained above, and may be defined by a user program of a thermostat (e.g. via a user interface and controller such as that described above with reference to Figure 1). In addition to user specified demands such as these however, the controller 160 illustrated in Figure 2 may be configured to determine thermal demand based on a temperature difference between the internal and external parts of a building, for example based on temperature data obtained from sensors at the building, the temperature difference may also be determined based on regional statistics, for example based on general, regional temperature measurements. For example a common external temperature may be used to determine the temperature difference for a set of dwellings in a common geographic area. The controller may also store data describing the power required to maintain temperature at a particular dwelling, or at a group of dwellings, and this may comprise a relationship such as the power per unit temperature of temperature difference between internal and external temperatures. The controller may be configured to select CHP systems to switch on to shed load as described above based on this stored data, and internal/external temperature data relating to the same dwellings and/or based on user heating programs which may be defined by a user program of a thermostat (e.g. via a user interface and controller such as that described above with reference to Figure 1).

Heating and power generation apparatus of the present disclosure may operate using different thermostatic set points for the electricity generator and the heat source (e.g. the boiler). The apparatus may be configured to operate the electricity generator as much as possible whilst staying within the desired temperature bounds of the building. For example, a first thermostatic set point may be selected based on a desired temperature of a zone of a building. The controller may monitor a temperature of the zone and operate the electricity generator and the heat source together in the event that the temperature is less than the first thermostatic set point. The controller may be configured so that the electricity generator is operated alone (e.g. the heat source is switched off) in the event that the temperature exceeds that first thermostatic set point provided that the temperature is less than a second thermostatic set point.

The controller may be configured to provide heat energy into a thermal store, such as a hot water tank or phase change material, PCM, store on similar criteria. For example the controller may be configured to operate the electricity generator and the heat source together to provide thermal energy to the thermal store in the event that the temperature of the thermal store is less than a third thermostatic set point. The controller may be configured so that the electricity generator is operated alone (e.g. the heat source is switched off) in the event that the temperature of the thermal store is greater than the third thermostatic set point provided that the temperature of the thermal store is less than a fourth thermostatic set point.

These thermostatic set points may be selected to reduce the number of times the electricity generator is switched on and off in a given period of time. For example the set points may be selected based on known thermal rise or fall times of the building, or known response times of the heat source and/or space heating, or known thermal losses of a zone of the building, for example based on a power loss per unit temperature difference between internal and external temperature.

Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims. For example, in some embodiments thermal stores such as storage heaters and/or phase change material thermal stores may be used in addition to or as an alternative to hot water tanks. As another example it will be appreciated that data may be received from, and output to a user, by means of any suitable controller, for example the user interface of Figure 1 (and one or more aspects of the controller) may be provided by a user carried (e.g. handheld) electronic device such as a Wi-Fi (RTM) enabled device or a telecommunications device such as a smartphone or tablet.

With reference to the drawings in general, it will be appreciated that schematic functional block diagrams are used to indicate functionality of systems and apparatus described herein. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

In some examples, one or more memory elements can store data and/or program instructions used to implement the operations described herein. Embodiments of the disclosure provide tangible, non-transitory storage media comprising program instructions operable to program a processor to perform any one or more of the methods described and/or claimed herein and/or to provide data processing apparatus as described and/or claimed herein.

The activities and apparatus outlined herein may be implemented using controllers and/or processors which may be provided by general purpose computers configured as described above, or by fixed logic such as assemblies of logic gates or programmable logic such as software and/or computer program instructions executed by a processor. Other kinds of programmable logic include programmable processors, programmable digital logic (e.g., a field programmable gate array (FPGA), an erasable programmable read only memory (EPROM), an electrically erasable programmable read only memory (EEPROM)), an application specific integrated circuit, ASIC, or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof.

## Claims

1. A temperature control apparatus for a building (10), the apparatus comprising:
an electricity generator (26), operable to contribute to an electrical power supply for electrical appliances at the building;
a heat transfer circuit adapted to circulate heat transfer fluid to cool the electricity generator (26);
a heating system comprising a heat source (22) for providing heat energy to a space heater (20) for heating at least one zone of the building and a heat exchanger (24) adapted to supplement the heat energy from the heat source with heat energy obtained from the heat transfer circuit;
a user interface (12) adapted to enable a user to select a desired temperature for the at least one zone of the building, and a first time period during which the desired temperature is to be maintained;
a controller configured (16) to operate the electricity generator to generate electricity and to preheat the space heater using the heat exchanger (24) and to obtain a first signal based on the temperature of the at least one zone of the building and a second signal based on the rate of change of the temperature and to determine when to switch on the heat source based on the user selected first time period, the desired temperature, the first signal and the second signal.

2. The apparatus of claim 1 wherein the heat source (22) is configured to provide heat energy to a hot water tank (18) arranged to store a supply of hot water for the building.

3. The apparatus of claim 2, wherein the user interface (12) is adapted to enable a user to select a second time period for the supply of hot water from the hot water tank (18).

4. The apparatus of claim 2 or 3 wherein the controller (16) is configured to determine when to operate the electricity generator (26) based on at least one of;
(i) the thermal capacity of the hot water tank (18); and
(ii) the first time period, the desired temperature and the current temperature of the at least one zone of the building.

5. The apparatus of any of claims 1 to 4 wherein the controller is configured to operate both the electricity generator (26) and the heat source (22) prior to the first time period, to achieve the desired temperature in the at least one zone of the building at the start of the first time period.

6. The apparatus of any of claims 1 to 5 wherein preheating the space heater (20) comprises operating the electricity generator (26) alone during a pre-heat period in which heat energy obtained from the heat transfer circuit is used to pre-heat the space heater (20), and wherein the controller is configured then to operate the electricity generator and heat source together until the at least one zone achieves the desired temperature.

7. The apparatus of any of claims 1 to 6 wherein the controller is configured to operate the electricity generator (26) in the event that the thermal capacity of the hot water tank (18) is greater than a selected threshold level.

8. The apparatus of any of claims 1 to 7 wherein the controller is configured to operate the electricity generator (26) based on a user command, and in which the apparatus is configured to override the user command based on at least one of:
(a) the thermal capacity of the hot water tank (18); and
(b) the first time period, the desired temperature and the current temperature of the at least one zone of the building.

9. The apparatus of any of claims 1 to 8 comprising a communications interface adapted to communicate over a network with a remote device, and to override a user command for the electricity generator (26) based on a message received from the remote device.

10. The apparatus of any of claims 1 to 9 wherein the apparatus comprises a serial communications interface adapted to communicate signals between the controller and the heating system according to a first protocol, and a protocol converter coupled to communicate commands from the controller to the electricity generator (26) according to a second protocol.

11. A method of operating a temperature control apparatus for a building (10), the apparatus comprising:
an electricity generator (26), operable to contribute to an electrical power supply for electrical appliances at the building (10);
a heat transfer circuit adapted to circulate heat transfer fluid to cool the electricity generator (26);
a heating system comprising a heat source (22) for providing heat energy to a space heater (20) for heating at least one zone of the building (10) and a heat exchanger (24) adapted to supplement the heat energy from the heat source (22) with heat energy obtained from the heat transfer circuit;
a user interface (12) adapted to enable a user to select a desired temperature for the at least one zone of the building, and a first time period during which the desired temperature is to be maintained,
wherein the method comprises operating a controller (16) of the apparatus to: operate the electricity generator to generate electricity and to preheat the space heater using the heat exchanger;
obtain a first signal based on the temperature of the at least one zone of the building (10) and a second signal based on the rate of change of the temperature; and
determine when to switch on the heat source (22) based on the user selected first time period, the desired temperature, the first signal and the second signal.

12. The method of claim 11 further comprising the controller determining when to operate the electricity generator based on at least one of;
(i) the thermal capacity of the hot water tank (18); and
(ii) the first time period, the desired temperature and the current temperature of the at least one zone of the building.

13. The method of any of claims 11 or 12 wherein preheating the space heater (20) comprises operating the electricity generator (26) alone during a pre-heat period in which heat energy obtained from the heat transfer circuit is used to pre-heat the space heater and then to operate the electricity generator (26) and heat source (27) together, until the at least one zone achieves the desired temperature.

14. The method of any of claims 11 to 13 further comprising the controller operating the electricity generator (26) based on a user command, and the controller overriding a user command based on at least one of;
(a) the thermal capacity of the hot water tank (18); and
(b) the first time period, the desired temperature and the current temperature of the at least one zone of the building.

15. A memory element comprising program instructions operable to program a processor of a temperature control apparatus according to any one of claims 1 to 10 to perform the method of any of claims 11 to 14.

## Patentansprüche

1. Temperatursteuervorrichtung für ein Gebäude (10), wobei die Vorrichtung Folgendes umfasst:
einen Elektrizitätsgenerator (26), der dafür ausgelegt ist, zu einer elektrischen Stromversorgung für elektrische Geräte am Gebäude beizutragen;
einen Wärmeübertragungskreis, der dafür ausgelegt ist, Wärmeübertragungsfluid zu zirkulieren, um den Elektrizitätsgenerator (26) zu kühlen;
ein Heizsystem, das Folgendes umfasst: eine Wärmequelle (22) zum Liefern von Wärmeenergie an einen Raumheizer (20) zum Heizen von mindestens einer Zone des Gebäudes und einen Wärmetauscher (24), der dafür ausgelegt ist, die Wärmeenergie von der Wärmequelle durch Wärmeenergie zu ergänzen, die von dem Wärmeübertragungskreis erhalten wird;
eine Benutzerschnittstelle (12), die dafür ausgelegt ist, einem Benutzer zu ermöglichen, Folgendes auszuwählen: eine gewünschte Temperatur für die mindestens eine Zone des Gebäudes und eine erste Zeitspanne, während der die gewünschte Temperatur beibehalten werden soll;
eine Steuereinheit (16), die für Folgendes konfiguriert ist: Betreiben des Elektrizitätsgenerators, Erzeugen von Elektrizität und Vorheizen des Raumheizers unter Verwendung des Wärmetauschers (24) und Erhalten eines ersten Signals basierend auf der Temperatur der mindestens einen Zone des Gebäudes und eines zweiten Signals basierend auf der Änderungsrate der Temperatur und Bestimmen, wann die Wärmequelle basierend auf der von dem Benutzer ausgewählten ersten Zeitspanne, der gewünschten Temperatur, dem ersten Signal und dem zweiten Signal eingeschaltet wird.

2. Vorrichtung nach Anspruch 1, wobei die Wärmequelle (22) dafür konfiguriert ist, Wärmeenergie an einen Heißwassertank (18) zu liefern, der dafür ausgelegt ist, einen Vorrat an heißem Wasser für das Gebäude zu speichern.

3. Vorrichtung nach Anspruch 2, wobei die Benutzerschnittstelle (12) dafür ausgelegt ist, einem Benutzer zu ermöglichen, eine zweite Zeitspanne für die Zufuhr von heißem Wasser aus dem Heißwassertank (18) auszuwählen.

4. Vorrichtung nach Anspruch 2 oder 3, wobei die Steuereinheit (16) dafür konfiguriert ist, zu bestimmen, wann der Elektrizitätsgenerator (26) basierend auf mindestens einem von Folgendem zu betreiben ist;
(i) der Wärmekapazität des Heißwassertanks (18); und
(ii) der ersten Zeitspanne, der gewünschten Temperatur und der aktuellen Temperatur der mindestens einen Zone des Gebäudes.

5. Vorrichtung nach einem der Ansprüche 1 bis 4, wobei die Steuereinheit konfiguriert ist, sowohl den Elektrizitätsgenerator (26) als auch die Wärmequelle (22) vor der ersten Zeitspanne zu betreiben, um die gewünschte Temperatur in der mindestens einen Zone des Gebäudes zu Beginn der ersten Zeitspanne zu erreichen.

6. Vorrichtung nach einem der Ansprüche 1 bis 5, wobei das Vorheizen des Raumheizers (20) das Betreiben des Elektrizitätsgenerators (26) allein während einer Vorheizperiode umfasst, in der Wärmeenergie, die von dem Wärmeübertragungskreis erhalten wird, verwendet wird, um den Raumheizer (20) vorzuheizen, und wobei die Steuereinheit dafür konfiguriert ist, dann den Elektrizitätsgenerator und die Wärmequelle zusammen zu betreiben, bis die mindestens eine Zone die gewünschte Temperatur erreicht.

7. Vorrichtung nach einem der Ansprüche 1 bis 6, wobei die Steuereinheit dafür konfiguriert ist, den Elektrizitätsgenerator (26) in dem Fall zu betreiben, dass die Wärmekapazität des Heißwassertanks (18) größer als ein ausgewählter Schwellenwert ist.

8. Vorrichtung nach einem der Ansprüche 1 bis 7, wobei die Steuereinheit für Folgendes konfiguriert ist: Betreiben des Elektrizitätsgenerators (26) basierend auf einem Benutzerbefehl und wobei die Vorrichtung dafür konfiguriert ist, den Benutzerbefehl basierend auf mindestens einem der folgenden Befehle zu überschreiben:
(a) der Wärmekapazität des Heißwassertanks (18); und
(b) der ersten Zeitspanne, der gewünschten Temperatur und der aktuellen Temperatur der mindestens einen Zone des Gebäudes.

9. Vorrichtung nach einem der Ansprüche 1 bis 8, die eine Kommunikationsschnittstelle umfasst, die dafür ausgelegt ist, über ein Netzwerk mit einer entfernten Vorrichtung zu kommunizieren und einen Benutzerbefehl für den Elektrizitätsgenerator (26) basierend auf einer Nachricht, die von dem entfernten Vorrichtung empfangen wird, zu überschreiben.

10. Vorrichtung nach einem der Ansprüche 1 bis 9, wobei die Vorrichtung Folgendes umfasst: eine serielle Kommunikationsschnittstelle, die dafür ausgelegt ist, Signale zwischen der Steuereinheit und dem Heizsystem gemäß einem ersten Protokoll zu übertragen und einen Protokollkonverter, der gekoppelt ist, um Befehle von der Steuereinheit an den Elektrizitätsgenerator (26) gemäß einem zweiten Protokoll zu übertragen.

11. Verfahren zum Betreiben einer Temperatursteuervorrichtung für ein Gebäude (10), wobei die Vorrichtung Folgendes umfasst:
einen Elektrizitätsgenerator (26), der dafür ausgelegt ist, zu einer elektrischen Stromversorgung für elektrische Geräte am Gebäude (10) beizutragen;
einen Wärmeübertragungskreis, der dafür ausgelegt ist, Wärmeübertragungsfluid zu zirkulieren, um den Elektrizitätsgenerator (26) zu kühlen;
Heizsystem, das Folgendes umfasst: eine Wärmequelle (22) zum Liefern von Wärmeenergie an einen Raumheizer (20) zum Heizen von mindestens einer Zone des Gebäudes (10) und einen Wärmetauscher (24), der dafür ausgelegt ist, die Wärmeenergie von der Wärmequelle (22) durch Wärmeenergie zu ergänzen, die von dem Wärmeübertragungskreis erhalten wird;
eine Benutzerschnittstelle (12), die dafür ausgelegt ist, einem Benutzer zu ermöglichen, Folgendes auszuwählen: eine gewünschte Temperatur für die mindestens eine Zone des Gebäudes und eine erste Zeitspanne, während der die gewünschte Temperatur beibehalten werden soll,
wobei das Verfahren das Betreiben einer Steuereinheit (16) der Vorrichtung zum Betreiben des Elektrizitätsgenerators umfasst, um Elektrizität zu erzeugen und den Raumheizer unter Verwendung des Wärmetauschers vorzuheizen;
Erhalten eines ersten Signals basierend auf der Temperatur der mindestens einen Zone des Gebäudes (10) und eines zweiten Signals basierend auf der Änderungsrate der Temperatur; und
Bestimmen, wann die Wärmequelle (22) basierend auf der von dem Benutzer ausgewählten ersten Zeitspanne, der gewünschten Temperatur, dem ersten Signal und dem zweiten Signal eingeschaltet wird.

12. Verfahren nach Anspruch 11, das ferner umfasst, dass die Steuereinheit bestimmt, wann der Elektrizitätsgenerator basierend auf mindestens einem von Folgendem zu betreiben ist;
(i) der Wärmekapazität des Heißwassertanks (18); und
(ii) der ersten Zeitspanne, der gewünschten Temperatur und der aktuellen Temperatur der mindestens einen Zone des Gebäudes.

13. Verfahren nach einem der Ansprüche 11 oder 12, wobei das Vorheizen des Raumheizers (20) Folgendes umfasst: Betreiben des Elektrizitätsgenerators (26) allein während einer Vorheizperiode, in der Wärmeenergie, die von dem Wärmeübertragungskreis erhalten wird, verwendet wird, um den Raumheizer vorzuheizen, und daraufhin Betreiben des Elektrizitätsgenerators (26) und der Wärmequelle (27) zusammen, bis die mindestens eine Zone die gewünschte Temperatur erreicht.

14. Verfahren nach einem der Ansprüche 11 bis 13, das ferner umfasst, dass die Steuereinheit den Elektrizitätsgenerator (26) basierend auf einem Benutzerbefehl betreibt und die Steuereinheit einen Benutzerbefehl basierend auf mindestens einem von Folgendem überschreibt:
(a) der Wärmekapazität des Heißwassertanks (18); und
(b) der ersten Zeitspanne, der gewünschten Temperatur und der aktuellen Temperatur der mindestens einen Zone des Gebäudes.

15. Speicherelement, das Programmanweisungen umfasst, die so betrieben werden können, dass sie einen Prozessor einer Temperatursteuervorrichtung nach einem der Ansprüche 1 bis 10 programmieren, um das Verfahren nach einem der Ansprüche 11 bis 14 durchzuführen.

## Revendications

1. Appareil de régulation de température destiné à un bâtiment (10), l'appareil comprenant :
un générateur d'électricité (26), ayant pour fonction de contribuer à une alimentation électrique d'appareils électriques dans le bâtiment ;
un circuit de transfert de chaleur conçu pour faire circuler un fluide de transfert de chaleur afin de refroidir le générateur d'électricité (26) ;
un système de chauffage comprenant une source de chaleur (22) destiné à fournir une énergie thermique à un chauffage d'espace (20) afin de chauffer au moins une zone du bâtiment, et un échangeur de chaleur (24) conçu pour compléter l'énergie thermique fournie par la source de chaleur avec une énergie thermique obtenue à partir du circuit de transfert de chaleur ;
une interface d'utilisateur (12) conçue pour permettre à un utilisateur de sélectionner une température souhaitée pour l'au moins une zone du bâtiment, et une première période de temps pendant laquelle la température souhaitée doit être maintenue ;
un contrôleur (16) configuré pour faire fonctionner le générateur d'électricité pour qu'il génère de l'électricité et pour qu'il préchauffe le chauffage d'espace au moyen de l'échangeur de chaleur (24), pour obtenir un premier signal sur la base de la température de l'au moins une zone du bâtiment, et un second signal sur la base du taux de variation de la température, et pour déterminer quand allumer la source de chaleur sur la base de la première période de temps sélectionnée par l'utilisateur, de la température souhaitée, du premier signal et du second signal.

2. Appareil selon la revendication 1, dans lequel la source de chaleur (22) est configurée pour fournir de l'énergie thermique à un réservoir d'eau chaude (18) conçu pour stocker une alimentation en eau chaude du bâtiment.

3. Appareil selon la revendication 2, dans lequel l'interface d'utilisateur (12) est conçue pour permettre à un utilisateur de sélectionner une seconde période de temps pour l'alimentation en eau chaude à partir du réservoir d'eau chaude (18).

4. Appareil selon la revendication 2 ou 3, dans lequel le contrôleur (16) est configuré pour déterminer quand faire fonctionner le générateur d'électricité (26) sur la base d'au moins un paramètre parmi :
(i) la capacité thermique du réservoir d'eau chaude (18) ; et
(ii) la première période de temps, la température souhaitée et la température actuelle de l'au moins une zone du bâtiment.

5. Appareil selon l'une quelconque des revendications 1 à 4, dans lequel le contrôleur est configuré pour faire fonctionner le générateur d'électricité (26) et la source de chaleur (22) avant la première période de temps, afin d'obtenir la température souhaitée dans l'au moins une zone du bâtiment au début de la première période de temps.

6. Appareil selon l'une quelconque des revendications 1 à 5, dans lequel le préchauffage du chauffage d'espace (20) consiste à faire fonctionner le générateur d'électricité (26) seul pendant une période de préchauffage pendant laquelle l'énergie thermique obtenue à partir du circuit de transfert de chaleur est utilisée pour préchauffer le chauffage d'espace (20), et dans lequel le contrôleur est ensuite configuré pour faire fonctionner le générateur d'électricité et la source de chaleur ensemble jusqu'à ce que l'au moins une zone atteigne la température souhaitée.

7. Appareil selon l'une quelconque des revendications 1 à 6, dans lequel le contrôleur est configuré pour faire fonctionner le générateur d'électricité (26) si la capacité thermique du réservoir d'eau chaude (18) est supérieure à un niveau de seuil sélectionné.

8. Appareil selon l'une quelconque des revendications 1 à 7, dans lequel le contrôleur est configuré pour :
faire fonctionner le générateur d'électricité (26) sur la base d'une commande d'utilisateur, l'appareil étant configuré pour remplacer la commande d'utilisateur sur la base d'au moins un paramètre parmi :
(a) la capacité thermique du réservoir d'eau chaude (18) ; et
(b) la première période de temps, la température souhaitée et la température actuelle de l'au moins une zone du bâtiment.

9. Appareil selon l'une quelconque des revendications 1 à 8, comprenant une interface de communication conçue pour communiquer sur un réseau avec un dispositif distant, et pour remplacer une commande d'utilisateur pour le générateur d'électricité (26) sur la base d'un message reçu du dispositif distant.

10. Appareil selon l'une quelconque des revendications 1 à 9, l'appareil comprenant une interface de communication série conçue pour communiquer des signaux entre le contrôleur et le système de chauffage selon un premier protocole, et un convertisseur de protocole couplé pour communiquer des commandes du contrôleur au générateur d'électricité (26) selon un second protocole.

11. Procédé de fonctionnement d'un appareil de régulation de température destiné à un bâtiment (10), comprenant :
un générateur d'électricité (26), ayant pour fonction de contribuer à une alimentation électrique d'appareils électriques dans le bâtiment (10) ;
un circuit de transfert de chaleur conçu pour faire circuler un fluide de transfert de chaleur afin de refroidir le générateur d'électricité (26) ;
un système de chauffage comprenant une source de chaleur (22) destiné à fournir une énergie thermique à un chauffage d'espace (20) afin de chauffer au moins une zone du bâtiment (10), et un échangeur de chaleur (24) conçu pour compléter l'énergie thermique fournie par la source de chaleur (22) avec une énergie thermique obtenue à partir du circuit de transfert de chaleur ;
une interface d'utilisateur (12) conçue pour permettre à un utilisateur de sélectionner une température souhaitée pour l'au moins une zone du bâtiment, et une première période de temps pendant laquelle la température souhaitée doit être maintenue,
le procédé consistant à faire fonctionner un contrôleur (16) de l'appareil pour :
faire fonctionner le générateur d'électricité pour qu'il génère de l'électricité et pour qu'il préchauffe le chauffage d'espace au moyen de l'échangeur de chaleur ;
obtenir un premier signal sur la base de la température de l'au moins une zone du bâtiment (10), et un second signal sur la base du taux de variation de la température ; et
déterminer quand allumer la source de chaleur (22) sur la base de la première période de temps sélectionnée par l'utilisateur, de la température souhaitée, du premier signal et du second signal.

12. Procédé selon la revendication 11, consistant en outre à déterminer, par le contrôleur, quand faire fonctionner le générateur d'électricité sur la base d'au moins un paramètre parmi :
(i) la capacité thermique du réservoir d'eau chaude (18) ; et
(ii) la première période de temps, la température souhaitée et la température actuelle de l'au moins une zone du bâtiment.

13. Procédé selon l'une quelconque des revendications 11 et 12, dans lequel le préchauffage du chauffage d'espace (20) consiste à faire fonctionner le générateur d'électricité (26) seul pendant une période de préchauffage pendant laquelle l'énergie thermique obtenue à partir du circuit de transfert de chaleur est utilisée pour préchauffer le chauffage d'espace, puis à faire fonctionner le générateur d'électricité (26) et la source de chaleur (27) ensemble jusqu'à ce que l'au moins une zone atteigne la température souhaitée.

14. Procédé selon l'une quelconque des revendications 11 à 13, consistant en outre, par le contrôleur, à faire fonctionner le générateur d'électricité (26) sur la base d'une commande d'utilisateur, et à remplacer, par le contrôleur, une commande d'utilisateur sur la base d'au moins un paramètre parmi :
(a) la capacité thermique du réservoir d'eau chaude (18) ; et
(b) la première période de temps, la température souhaitée et la température actuelle de l'au moins une zone du bâtiment.

15. Élément de mémoire comprenant des instructions de programme permettant de programme processeur d'un appareil de régulation de température selon l'une quelconque des revendications 1 à 10 afin de réaliser le procédé selon l'une quelconque des revendications 11 à 14.
